# EUROPÄISCHE PATENTSCHRIFT

(11) **EP 2 033 815 B1**
(45) Veröffentlichungstag und Bekanntmachung des Hinweises auf die Patenterteilung: **25.01.2012**
(21) Anmeldenummer: 08015427.1
(22) Anmeldetag: 01.09.2008
(51) Int. Cl.: B60C 27/08

(54) **Stegglied für eine Reifenkette**
Stud link for a tyre chain
Maillon à étai pour chaînes de pneu

(30) Priorität: 04.09.2007 DE 102007043744
(43) Veröffentlichungstag der Anmeldung: 11.03.2009
(73) Patentinhaber: Erlau AG, 73431 Aalen (DE)
(72) Erfinder: Rieger, Johannes Werner, 73447 Oberkochen (DE); Bogdan, Zvonimir, 73453 Abtsgmünd (DE)
(74) Vertreter: Jackisch-Kohl, Anna-Katharina

(56) Entgegenhaltungen:
- EP-A- 0 255 506
- EP-A- 0 425 986
- EP-A- 0 625 438
- DE-U- 1 993 827
- DE-U1-202004 005 335
- US-A- 3 799 232
- US-A- 5 072 763

## Beschreibung

Die Erfindung betrifft ein Stegglied nach dem Oberbegriff des Anspruches 1.

Reifenketten, insbesondere Reifenschutzketten, bestehen üblicherweise aus ineinander greifenden Steggliedern und Ringgliedern. Insbesondere bei rauen Einsatzbedingungen, beispielsweise bei Untertageeinsatz, sind die Kettenglieder der Reifenkette einer hohen Belastung und einem hohen Verschleiß ausgesetzt. Der Verschleiß der Kettenglieder tritt nicht nur im Bereich der mit dem Untergrund in Berührung kommenden Verschleißseite der Stegglieder auf, sondern auch im Eingriffsbereich zwischen den Ringgliedern und den Steggliedern. Zudem werden die Ringglieder bei den bekannten Reifenketten einer enormen Biegebelastung beim Überrollen durch den Reifen ausgesetzt. Da Stegglieder verhältnismäßig schmal sind, besteht die Gefahr, dass sie kippen und dadurch eine hohe Biegekraft auf die einhängten Ringglieder ausüben, die dabei brechen können.

Bei einem bekannten Stegglied der gattungsbildenden Art (DE 20 2004 005 335 U1) sind in den unteren Hälften der Außenseite des mittleren Verschleißsteges seitliche Vertiefungen vorgesehen, die nach unten in Richtung auf die Reifenseite offen sind. Damit werden die Ränder der seitlichen Vertiefungen erst wirksam, wenn der mittlere Verschleißsteg nahezu vollständig abgenutzt ist.

Es ist auch ein Stegglied bekannt (EP 0 255 506), dessen Verschleißteil vier Verschleißstege aufweist. Sie sind durch Vertiefungen voneinander getrennt, in denen sich jeweils ein zwischen den benachbarten Verschleißstegen sich erstreckender Steg befindet. Die mittleren Verschleißstegen erstrecken sich über die Seitenflächen des Steggliedes, so dass über diese Seitenflächen vorstehende Stegabschnitte gebildet sind. Die Verschleißstege sind mit seitlichen Vertiefungen versehen, die allseitig geschlossen sind und über mehr als die halbe Höhe über den mittleren Verschleißsteg auf die Einhängeöffnung für die Ringglieder ragen. Die Vertiefungen liegen mit relativ großem Abstand von der Stirnseite der Verschleißstege, so dass die seitlichen Vertiefungen erst bei starkem Verschleiß der Verschleißstege wirksam werden.

Der Erfindung liegt die Aufgabe zugrunde, das gattungsgemäße Stegglied so auszubilden, dass eine lange Einsatzdauer gewährleistet ist, indem es einerseits stabil ist und andererseits mit zunehmendem Verschleiß noch eine gute Griffigkeit aufweist.

Diese Aufgabe wird beim gattungsgemäßen Stegglied erfindungsgemäß mit den kennzeichnenden Merkmalen des Anspruches 1 gelöst.

Beim erfindungsgemäßen Stegglied ist in den Vertiefungen zwischen den Verschleißstegen der in Längsrichtung des Steggliedes sich erstreckende Steg vorgesehen, der im Einsatz zu einem stabilen Laufverhalten führt. Innerhalb der Reifenschutzkette wird somit eine hervorragende Laufstabilität erhalten. Durch die Stege werden auch zusätzliche gehärtete Kanten gebildet. Da sich die seitlichen Vertiefungen außerdem über die Höhe der Auβenseiten der vorstehenden Verschleißstegabschnitte erstrecken, werden die seitlichen Vertiefungen schon frühzeitig wirksam, wenn der mittlere Verschleißsteg noch nicht sehr stark abgenutzt ist. Dann gelangt die Oberseite des mittleren Verschleißsteges in den Bereich der seitlichen Vertiefungen, wodurch die Ränder dieser Vertiefungen als zusätzliche Griffkanten wirksam werden. Da der mittlere Verschleißsteg zur Bildung einer vergrößerten Auflagebreite über die Seitenflächen des Steggliedes vorsteht, ergibt sich eine vergrößerte Auflagebreite. Dadurch wird das erfindungsgemäße Stegglied hervorragend gegen Kippen abgestützt, wodurch die Gefahr einer zu hohen Biegebelastung des in das Stegglied eingehängten Kettengliedes vermindert wird.

Vorteilhaft ist die Dicke und/oder Höhe des Steges kleiner als die Breite der Vertiefung bzw. die Höhe der Verschleißstege. Dadurch kommen beim Einsatz des erfindungsgemäßen Steggliedes zunächst nur die Verschleißstege mit dem Untergrund in Kontakt. Mit zunehmender Einsatzdauer verschleißen die Verschleißstege, so dass dann auch die Stege in den Vertiefungen mit dem Untergrund in Kontakt kommen. Da ihre Dicke vorteilhaft kleiner ist als die Breite der Vertiefungen, ergeben sich zusätzliche Kanten, die mit dem Untergrund in Berührung kommen und somit das Greifverhalten des Steggliedes verbessern.

Vorteilhaft hat der Steg in den Vertiefungen rechteckigen Querschnitt. Die zwischen den Seitenflächen des Steges gebildeten Kanten erhöhen die Griffigkeit des Steggliedes und stabilisieren dessen Laufverhalten.

Vorteilhaft ist in den Seitenflächen zumindest des einen Verschleißsteges, vorzugsweise aller Verschleißstege, eine Vertiefung vorgesehen. Ist der Verschleißteil des erfindungsgemäßen Steggliedes so weit verschlissen, dass die aktive Verschleißseite in den Bereich dieser Vertiefungen gelangt, dann werden in diesen Bereichen neue Kanten gebildet, die die Griffigkeit des Steggliedes wieder erhöhen. Somit ist auch über eine lange Einsatzdauer des erfindungsgemäßen Steggliedes sichergestellt, dass das Greif- und Spurverhalten des Steggliedes stets hervorragend ist.

Das erfindungsgemäße Stegglied eignet sich hervorragend für Reifenschutzketten, insbesondere für solche Reifenschutzketten, die im Untertagebau eingesetzt werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Seitenansicht ein erfindungsgemäßes Stegglied,
- Fig. 2: eine Draufsicht auf das Stegglied gemäß Fig. 1,
- Fig. 3: eine Stirnansicht des Steggliedes gemäß Fig. 1,
- Fig. 4: eine perspektivische Darstellung des Steggliedes gemäß Fig. 1,
- Fig. 5: einen Schnitt längs der Linie C-C in Fig. 1,
- Fig. 6: einen Gliederverband, bestehend aus dem erfindungsgemäßen Stegglied und einem eingehängten Ringglied,
- Fig. 7: das Detail B in Fig. 6 in vergrößerter Darstellung,
- Fig. 8: in perspektivischer Darstellung einen Teil einer Reifenkette mit erfindungsgemäßen Steggliedern, die durch jeweils ein Ring- glied miteinander verbunden sind.

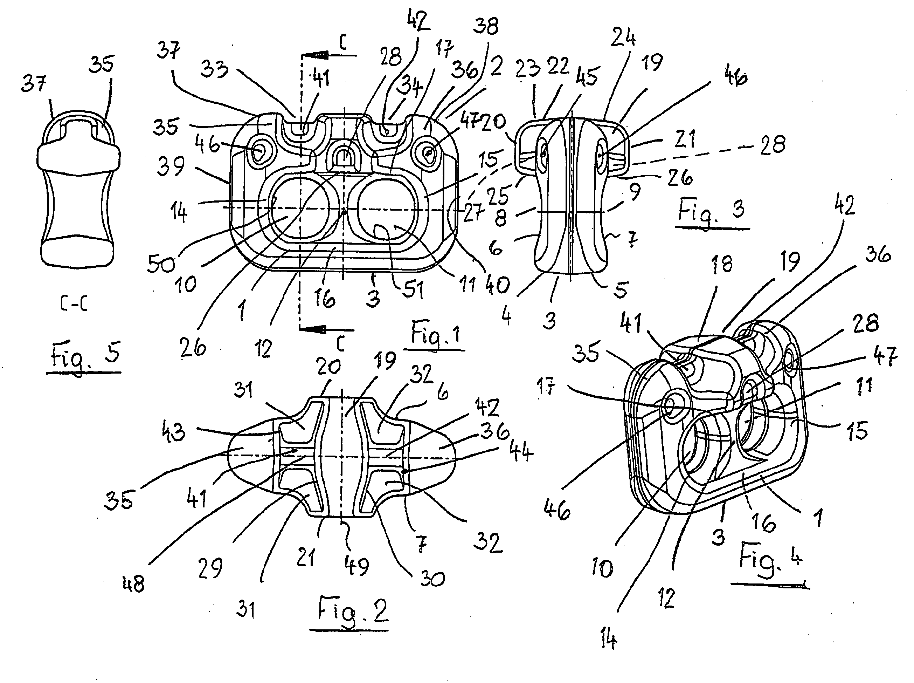

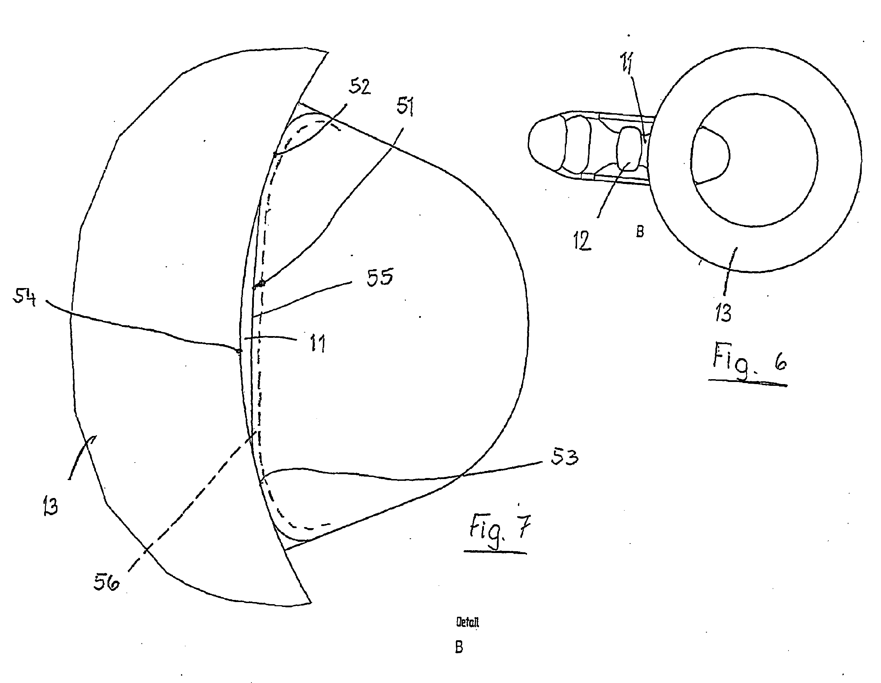

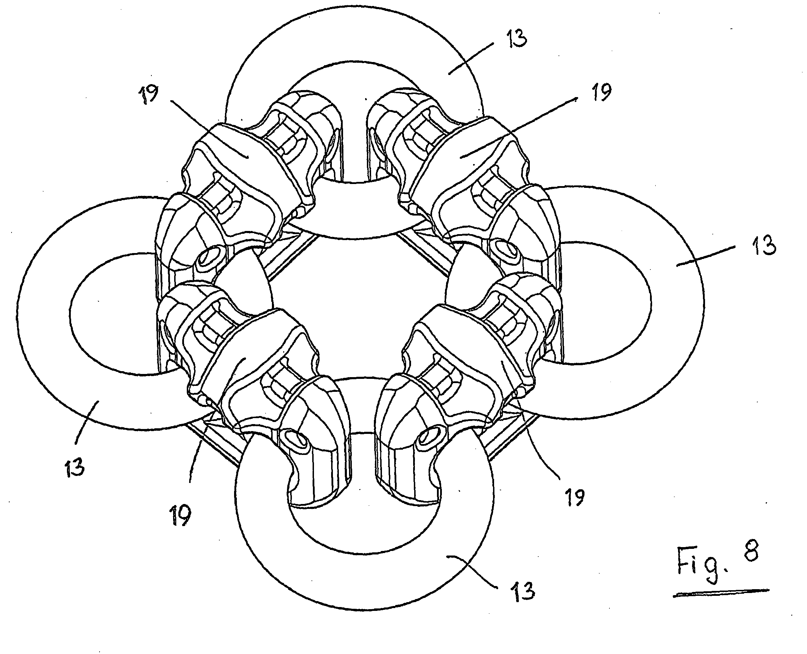

Das Stegglied gemäß den Fig. 1 bis 5 hat einen Reifenanlageteil 1 und einen Verschleißteil 2. Der Anlageteil 1 hat eine Anlagefläche 3, mit der das Stegglied bei montierter Reifenkette auf der Reifenfläche aufsteht. Die Reifenanlagefläche 3 ist dachförmig ausbildet (Fig. 3) und hat dementsprechend zwei stumpfwinklig aneinander anschließende Flächenteile 4 und 5, die in Richtung auf den Reifen konvergieren. Die Flächenteile 4, 5 gehen jeweils stetig gekrümmt in Seitenflächen 6, 7 des Steggliedes über. Sie sind etwa in halber Höhe mit einer Vertiefung 8, 9 versehen, die konvex gekrümmt ist. In Höhe dieser Vertiefungen 8, 9 befinden sich zwei Einhängeöffnungen 10, 11, die durch einen Steg 12 voneinander getrennt sind. Durch die Einhängeöffnungen 10, 11 ragen innerhalb des Kettenverbandes Ringglieder 13 (Fig. 6 und 8).

Die Vertiefungen 8, 9 haben, wie dies beispielhaft für die Vertiefung 9 in den Fig. 1 und 4 dargestellt ist, etwa rechteckförmigen Umriss mit abgerundeten Schmalseiten 14, 15. Die Schmalseiten 14, 15 gehen jeweils stetig gekrümmt in die Längsseiten 16, 17 der Vertiefungen 8, 9 über. Die der Reifenanlagefläche 3 benachbarte Längsseite 16 geht gekrümmt in die Einhängeöffnungen 10, 11 und in den Steg 12 über.

Der Verschleißteil 2 hat größere Dicke als der Reifenanlageteil 1, so dass ein entsprechend großes Verschleißvolumen zur Verfügung steht und dementsprechend das Stegglied eine lange Einsatzdauer hat. In der Verschleißseite 18 befindet sich etwa in halber Länge des Steggliedes ein Vorsprung 19, der über die Seitenflächen 6, 7 des Steggliedes vorsteht. Der Vorsprung 19 hat in halber Dicke des Steggliedes seine größte Breite und verjüngt sich in Richtung auf seine Außenseiten 20, 21. Sie sind über einen Teil ihrer Höhe eben ausgebildet und gehen stetig gekrümmt in die Oberseite 22 des Vorsprungs 19 über (Fig. 3). Die Oberseite 22 ist wie die Reifenanlagefläche 3 vorteilhaft dachförmig ausgebildet und weist zwei stumpfwinklig aneinander anschließende Flächenteile 23, 24 auf, die konvergierend verlaufen und in halber Dicke des Steggliedes aufeinander treffen. Der Vorsprung 19 liegt, in Seitenansicht gemäß Fig. 1 gesehen, etwa in Höhe des Steges 12. Die Unterseite 25, 26 der über die Seitenflächen 6, 7 vorstehenden Abschnitte des Vorsprunges 19 verlaufen konvergierend in Richtung auf die Seitenflächen (Fig. 3). Die Außenseiten 20, 21 liegen parallel zueinander (Fig. 2) und gehen jeweils konkav gekrümmt in die Seitenfläche 6, 7 des Steggliedes über. Gemäß Fig. 2 gehen die Seitenflächen 6, 7 an beiden Enden des Steggliedes bogenförmig ineinander über. Dadurch sind die Enden des Steggliedes jeweils im Querschnitt verjüngt ausgebildet.

In den Außenseiten 20, 21 des Vorsprunges 19 ist jeweils eine Vertiefung 27, 28 vorgesehen. Wie die Fig. 1 und 4 für die Vertiefung 28 zeigen, sind die Vertiefungen zur Unterseite 25, 26 offen. Die Vertiefungen 27, 28 erstrecken sich über die gesamte Höhe der ebenen Außenseiten 20, 21 bis zum bogenförmigen Übergang, über den die ebenen Außenseiten 20, 21 in die Oberseite 22 des Vorsprunges 19 übergehen. Die Vertiefungen 27, 28 haben teilkreisförmigen, vorzugsweise halbkreisförmigen Umriss. Wie sich aus Fig. 3 ergibt, erstrecken sich die Vertiefungen 27, 28 bis in Höhe der Seitenflächen 6, 7 des Steggliedes. Die Vertiefungen 27, 28 liegen in Verlängerung des Steges 12.

Der Vorsprung 19 hat Seitenflächen 29, 30 (Fig. 2), die über ihre Länge konvex gekrümmt verlaufen und in den Boden 31, 32 von Vertiefungen 33, 34 übergehen. Sie trennen den mittig angeordneten Vorsprung 19 von Endbereichen 35, 36 des Steggliedes. Sie haben eine über die Dicke des Steggliedes teilkreisförmig gekrümmte Oberseite 37, 38. Die Oberseiten 37, 38 gehen, in Seitenansicht gemäß Fig. 1 gesehen, stetig gekrümmt in die Stirnseiten 39, 40 des Steggliedes über, die ihrerseits bogenförmig gekrümmt in die Reifenanlagefläche 3 übergehen.

In halber Dicke des Steggliedes befindet sich in den Vertiefungen 33, 34 jeweils ein Steg 41, 42 der jeweils in halber Breite der Vertiefungen 33, 34 in Längsrichtung des Steggliedes verläuft (Fig. 2). Die Stege 41, 42 verbinden die Seitenflächen 29, 30 des mittleren Vorsprunges 19 mit den gegenüberliegenden Seitenflächen 43, 44 der Endbereiche 35, 36. Die Stege 41, 42 sind niedriger als der mittlere Vorsprung 19 und die Endbereiche 35, 36.

Die Endbereiche 35, 36 sind an ihren beiden Außenseiten jeweils mit einer Vertiefung 45 bis 47 versehen, die runden Umriss hat. Die Vertiefungen 45 bis 47 liegen etwa in Höhe des Bodens 31, 32 der Vertiefungen 33, 34.

Die Stege 41, 42, die sich in Längsrichtung des Steggliedes erstrecken, bilden Spurstege, die zu einer zusätzlichen Stabilität im Laufverhalten der mit den Steggliedern versehenen Reifenkette führen.

Das Stegglied ist symmetrisch zu seiner Längsmittelebene 48 und seiner Quermittelebene 49 (Fig. 2) ausgebildet. Dadurch ist eine einfache Montage der Reifenkette mit den Steggliedern und den Ringgliedern 13 sichergestellt.

Das Stegglied kommt im Einsatz zunächst mit den Endbereichen 35, 36 und dem Vorsprung 19 mit dem Untergrund in Eingriff. Aufgrund der Vertiefungen 33, 34 werden an den Übergängen vom Vorsprung 19 und den Endbereichen 35, 36 in die Vertiefungen 33, 34 Kanten gebildet, die zu einer hohen Griffigkeit führen. Da der mittlere Vorsprung 19 seitlich über die Seitenflächen 6, 7 des Steggliedes übersteht, ergibt sich im Bereich der Verschleißseite eine große Auflagebreite, die zu einer hohen Stabilität gegen Kippen des Steggliedes führt. Aufgrund dieser hohen Kippstabilität ist auch die Gefahr verringert, dass auf die in die Stegglieder eingehängten Ringglieder 13 eine Biegekraft ausgeübt wird. Dadurch sind auch die Ringglieder 13 vor einem Bruch durch zu hohe Belastung durch die Stegglieder hervorragend geschützt. Der verbreiterte Vorsprung 19 in Verbindung mit der beschriebenen Griffigkeit führt zu einem hervorragenden Laufverhalten der Reifenkette im Einsatz.

Mit zunehmendem Verschleiß werden die Endbereiche 35, 36 und der Vorsprung 19 abgetragen. Dann kommen die Spurstege 41, 42 zum Tragen, die, da ihre Breite kleiner ist als die Breite des Steggliedes, zusätzliche Kanten bilden. Mit zunehmendem Verschleiß werden somit die Griffigkeit und die Spurhaltung des Steggliedes nicht verringert. Mit zunehmender Einsatzdauer wird das Stegglied im Bereich seines Verschleißteiles 2 so verschlissen, dass die Vertiefungen 27, 28; 45 bis 47 zum Tragen kommen. Das Material des Steggliedes wird bis in Höhe der Vertiefungen abgetragen, wodurch wiederum zusätzliche Kanten gebildet werden, die auch bei größerem Verschleiß des Steggliedes zu einer hohen Griffigkeit führen. Auf diese Weise kann das Stegglied so lange im Einsatz bleiben, bis sein Verschleißteil 2 nahezu vollständig verbraucht ist.

Die in den Vertiefungen 33, 34 befindlichen Stege 41, 42 bilden zusätzliche gehärtete Kanten, wenn der Verschleißteil 2 bis auf Höhe der Stege abgetragen ist. Das Stegglied wird zumindest im Bereich seines Verschleißteiles 2 gehärtet, so dass bei entsprechendem Verschleiß des Steggliedes die Spurstege 41, 42 mit ihren Längskanten zusätzliche gehärtete Kanten bilden.

Die die Einhängeöffnungen 10, 11 begrenzenden Wände 50, 51 sind so geformt, dass die Flächenpressung zwischen der Wand 50, 51 und dem Ringglied 13 so klein wie möglich gehalten wird. Anhand der Fig. 6 und 7 wird dies in Bezug auf die Einhängeöffnung 11 näher erläutert. Die Wand 51 ist so ausgebildet, dass sie zwei im Querschnitt teilkreisförmige Anlageflächen 52, 53 aufweist, deren Krümmungsradius dem Krümmungsradius der Innenseite 54 des Ringgliedes 13 entspricht (Fig. 7). Dadurch liegen die beiden Anlageflächen 52, 53 flächig an der Innenseite 54 des Ringgliedes 13 an. Im Bereich zwischen den beiden Anlageflächen 52, 53 ist die Wand 51 zurückgesetzt. Dieser zurückgesetzte Wandabschnitt 55 hat dadurch Abstand von der Innenseite 54 des Ringteiles 13.

Die beiden Anlageflächen 52, 53 liegen nahe am Übergang der Wand 51 in die Außenseiten des Steggliedes. Die Anlageflächen 52, 53 erstrecken sich vorteilhaft über den gesamten Umfang der Einhängeöffnung 10, 11. Grundsätzlich ist es aber auch ausreichend, wenn die Anlageflächen 52, 53 nur in dem Bereich der Wand 51 vorgesehen sind, der im Einsatz der Reifenkette mit dem Ringglied 13 in Berührung kommen kann.

Die beiden Anlageflächen 52, 53 führen zu einer Stabilisierung des Steggliedes und/oder des Ringgliedes 13. Das Verschleißverhalten des Steggliedes und/oder des Ringgliedes 13 wird optimiert. Mit zunehmendem Verschleiß der Anlageflächen 52, 53 wird die Anlagebreite größer, da nunmehr auch Teile des zurückgesetzten Wandabschnittes 55 in Anlage an die Innenseite 54 des Ringteiles 13 kommen.

Aufgrund der mit Abstand voneinander liegenden Anlageflächen 52, 53 kann auch eine Härtezone 56 der Wand 51 des Steggliedes über längere Zeit genutzt werden. Dadurch wird ebenfalls die Einsatzdauer des Steggliedes erhöht.

Grundsätzlich ist es auch möglich, dass die Wand 51 auch drei Anlageflächen aufweist, zwischen denen sich jeweils zurückgesetzte Wandabschnitte befinden. Auch in diesem Fall erfolgt die Abstützung des Ringteiles 13 zunächst nicht über die gesamte Breite der Einhängeöffnung 10, 11, so dass ein optimales Verschleißverhalten erreicht und die Stabilisierung der Kettenglieder gewährleistet wird.

Fig. 8 zeigt einen Teil einer Reifenkette, der aus vier Steggliedern besteht, die durch jeweils ein Ringglied 13 miteinander verbunden sind. Die Stegglieder sind in der beschriebenen Weise ausgebildet. Im Eingriffsbereich der Ringglieder 13 mit den Steggliedern erfolgt die Abstützung und Stabilisierung in der anhand der Fig. 6 und 7 beschriebenen Weise. Aufgrund der Vorsprünge 19 zeichnet sich dieser Kettengliederverband durch eine hohe Stabilität im Laufverhalten aus. Die Vorsprünge 19 verringern die Gefahr der Biegewirkung auf die Ringglieder 13, wobei infolge der beschriebenen Eingriffsverhältnisse in den Einhängeöffnungen 10, 11 die Stabilisierung erhöht und die Flächenpressung zwischen den Ringgliedern 13 und den Steggliedern nur gering ist.

## Patentansprüche

1. Stegglied mit einem Verschleißteil (2), der an seiner Verschleißseite endseitige Verschleißstege (35, 36) und einen mittleren Verschleißsteg (19) aufweist, wobei die Verschleißstege (19, 35, 36) in der Verschleißseite durch Vertiefungen (33, 34) voneinander getrennt sind, wobei der mittlere Verschleißsteg (19) über die Seitenflächen (6, 7) des Steggliedes vorstehende Abschnitte aufweist und in seinen Außenseiten seitliche Vertiefungen (28, 28) hat, wobei die Unterseiten (25, 26) der über die Seitenflächen (6, 7) des Steggliedes vorstehenden Abschnitte des mittleren Verschleißsteges (19) in Richtung auf die Seitenflächen (6, 7) konvergieren und die seitlichen Vertiefungen (27, 28) des mittleren Verschleißsteges (19) zur Unterseite der vorstehenden Abschnitte des mittleren Verschleißsteges (19) offen sind,
**dadurch gekennzeichnet, dass** sich die seitlichen Vertiefungen (27, 28) über die Höhe der Außenseiten (20, 21) der vorstehenden Abschnitte bis in den Übergang von den Außenseiten (20, 21) in die Oberseite (22) des mittleren Verschleißsteges (19) erstrecken, und dass zwischen benachbarten Verschleißstegen (19, 35, 36) ein in Längsrichtung des Stegliedes sich erstreckender Steg (41, 42) vorgesehen ist.

2. Stegglied nach Anspruch 1,
**dadurch gekennzeichnet, dass** der Steg (41, 42) rechteckigen Querschnitt aufweist.

3. Stegglied nach Anspruch 1 oder 2,
**dadurch gekennzeichnet, dass** die Dicke des Steges (41, 42) kleiner ist als die Breite der Vertiefung (33, 34).

4. Stegglied nach einem der Ansprüche 1 bis 3,
**dadurch gekennzeichnet, dass** die Höhe des Steges (41, 42) kleiner ist als die Höhe der Verschleißstege (19, 35, 36).

5. Stegglied nach einem der Ansprüche 1 bis 4,
**dadurch gekennzeichnet, dass** in den Seitenflächen der endseitigen Verschleißstege (35, 36) Vertiefungen (45 bis 47) vorgesehen sind.

6. Stegglied nach einem der Ansprüche 1 bis 5,
**dadurch gekennzeichnet, dass** der mittlere Verschleißsteg (19) eine dachförmige Verschleißseite (18) aufweist.

7. Stegglied nach einem der Ansprüche 1 bis 6,
**dadurch gekennzeichnet, dass** eine Reifenanlageseite (3) des Steggliedes dachförmig ausgebildet ist.

8. Stegglied nach einem der Ansprüche 1 bis 7,
**dadurch gekennzeichnet, dass** das Stegglied spiegelsymmetrisch zu seiner Längsmittelebene (48) ausgebildet ist.

9. Stegglied nach einem der Ansprüche 1 bis 8,
**dadurch gekennzeichnet, dass** das Stegglied spiegelsymmetrisch zu seiner Quermittelebene (49) ausgebildet ist.

10. Stegglied nach einem der Ansprüche 1 bis 9,
**dadurch gekennzeichnet, dass** die seitlichen Vertiefungen (27, 28) des mittleren Verschleißsteges (19) teilkreisförmigen Umriss haben.

## Claims

1. Stud link having a wear part (2), comprising terminal wear stays (35, 36) at its wear side and a central wear stay (19), whereas the wear stays (19, 35, 36) on the wear side are separated from one another by recesses (33, 34), whereas the central wear stay (19) comprises sections projecting over the lateral surfaces (6, 7) of the stud link and lateral recesses (27, 28) in its outer sides, whereas the bottom sides (25, 26) of the sections of the central wear stay (19) projecting over the lateral surfaces (6, 7) of the stud link converge in the direction towards the lateral surfaces (6, 7) and the lateral recesses (27, 28) of the central wear stay (19) are open towards the bottom side of the projecting sections of the central wear stay (19),
**characterised in that** the lateral recesses (27, 28) extend across the hight of the outer sides (20, 21) of the projecting sections up to the transition from the outer sides (20, 21) to the top side (22) of the central wear stay (19), and that a stay (41, 42) extending in the longitudinal direction of the stud link is provided between neighbouring wearing stays (19, 35, 36).

2. Stud link according to claim 1,
**characterised in that** the stay (41, 42) has a rectangular cross-section.

3. Stud link according to claim 1 or 2,
**characterised in that** the thickness of the stay (41, 42) is less than the width of the recess (33, 34).

4. Stud link according to one of the claims 1 to 3,
**characterised in that** the height of the stay (41, 42) is less than the height of the wear stays (19, 35, 36).

5. Stud link according to one of the claims 1 to 4,
**characterised in that** within the lateral surfaces of the terminal wear stays (35, 36) recesses (45 to 47) are provided.

6. Stud link according to one of the claims 1 to 5,
**characterised in that** the central wear stay (19) comprises a roof-shaped wearing side (18).

7. Stud link according to one of the claims 1 to 6,
**characterised in that** one tyre contact surface (3) of the stud link has a roof-like shape.

8. Stud link according to one of the claims 1 to 7,
**characterised in that** the stud link is configured mirror-symmetrically to its longitudinal midplane (48).

9. Stud link according to one of the claims 1 to 8,
**characterised in that** the stud link is configured mirror-symmetrically to its transversal midplane (49).

10. Stud link according to one of the claims 1 to 9,
**characterised in that** the lateral recesses (27, 28) of the central wear stay (19) are semi-circular in shape.

## Revendications

1. Maillon à étai avec une pièce d'usure (2), comprenant à son côté d'usure des étais d'usure terminaux (35, 36) et un étai d'usure moyen (19), les étais d'usure (19, 35, 36) étant séparés l'un de l'autre par des cavités (33, 34) dans les côtés d'usure, l'étai d'usure moyen (19) comprenant des sections faisant saillie sur les côtés latéraux (6, 7) du maillon à étai et ayant des cavités latérales (28, 29) dans les côtés extérieurs de celui-ci, les partie inférieurs (25, 26) des sections faisant saillie sur les côtés latéraux (6, 7) du maillon à étai moyen (19) convergeant en direction des côtés latéraux (6, 7) et les cavités latérales (27, 28) de l'étai d'usure moyen (19) étant ouvertes vers le partie inférieur des sections d'étai d'usure moyen (19) saillantes.
**caractérisé en ce que** les cavités latérales (27, 28) s'étendent sur la hauteur des parties extérieurs (20, 21) des sections saillantes jusqu'à la transition des parties extérieurs (20, 21) dans le côté supérieur (22) de l'étai d'usure moyen (19) et que, entre des étais d'usure avoisinants (19, 35, 36) est prévu un étai (41, 42), s'étendant en direction longitudinale du maillon à étai.

2. Maillon à étai selon revendication 1,
**caractérisé en ce que** l'étai (41, 42) comprend une coupe transversale rectangulaire.

3. Maillon à étai selon revendication 1 ou 2,
**caractérisé en ce que** l'épaisseur de l'étai (41, 42) est plus petite que la largeur de la cavité (33, 34).

4. Maillon à étai selon une des revendications 1 à 3,
**caractérisé en ce que** la hauteur d'étai (41, 42) est plus petite que la hauteur des étais d'usure (19, 35, 36).

5. Maillon à étai selon une des revendications 1 à 4,
**caractérisé en ce que** des cavités (45 à 47) sont prévues dans les côtés latéraux des étais d'usure terminaux (35, 36).

6. Maillon à étai selon une des revendications 1 à 5,
**caractérisé en ce que** l'étai d'usure moyen (19) comprend un côté d'usure (18) en forme de toit.

7. Maillon à étai selon une des revendications 1 à 6,
**caractérisé en ce que** le côté de contact du pneu (3) du maillon à étai est configuré en forme de toit.

8. Maillon à étai selon une des revendications 1 à 7,
**caractérisé en ce que** le maillon à étai est configuré en position réfléchie symétrique par rapport à son plan médian longitudinal (48).

9. Maillon à étai selon une des revendications 1 à 8,
**caractérisé en ce que** le maillon à étai est configuré en position réfléchie symétrique par rapport à son plan médian transversal (49).

10. Maillon à étai selon une des revendications 1 à 9,
**caractérisé en ce que** les cavités latérales (27, 27) de l'étai d'usure moyen (19) ont un contour en forme d'arc.
